# EUROPEAN PATENT SPECIFICATION

(11) **EP 3 496 469 B1**
(45) Date of publication and mention of the grant of the patent: **02.12.2020**
(21) Application number: 18211248.2
(22) Date of filing: 10.12.2018
(51) Int. Cl.: H04W 52/02, H04W 76/27

(54) **DATA TRANSMISSION MECHANISM OF TIME-DIVISION DUPLEX COMMUNICATION SYSTEM SUPPORTING DIFFERENT RADIO COMMUNICATION STANDARDS**
DATENÜBERTRAGUNGSMECHANISMUS FÜR ZEITDUPLEXKOMMUNIKATIONSSYSTEM MIT UNTERSTÜTZUNG VON VERSCHIEDENEN FUNKKOMMUNIKATIONSSTANDARDS
MÉCANISME DE TRANSMISSION DE DONNÉES DE SYSTÈME DE COMMUNICATION EN DUPLEX À RÉPARTITION DANS LE TEMPS PRENANT EN CHARGE DIFFÉRENTES NORMES DE COMMUNICATION RADIO

(30) Priority: 10.12.2017 US 201762596896 P; 04.12.2018 US 201816208562
(43) Date of publication of application: 12.06.2019
(73) Proprietor: MEDIATEK INC., Hsin-Chu 300 (TW)
(72) Inventor: SU, Shih-Chang, 30078 Hsinchu (TW)
(74) Representative: Hoefer & Partner Patentanwälte mbB

(56) References cited:
- EP-A1- 3 089 525

## Description

### Cross Reference to Related Applications

This application claims priority of U.S. provisional application Ser. No. 62/596,896 filed on December 10, 2017.

### Background

Generally speaking, a communication device may have co-located multi-radios (for example, WLAN, Bluetooth, LTE) to support different communication standards. Conventional WLAN transceiver in such multi-radios device may need to operate in a time-division duplex (TDD) mode with co-located radios to avoid mutual radio signal interference. Conventional WLAN transceiver typically adopts the scheme of switching between normal and radio inactive operation mode to support such TDD operation mode. In radio inactive mode, a WLAN transceiver is not be able to do frame exchange with peer WLAN radio circuit. Typically, a WLAN transceiver adopts power save protocol to switch between normal and radio inactive mode. A WLAN transceiver set the power management (PM) bit in a frame header to indicate its current power save mode to a peer access point. The PM bit is set to '1' to indicate that the WLAN transceiver in the power save mode, and is set to '0' to indicate that the WLAN transceiver in the normal mode. The access point shall check the PM bit from the associated WLAN transceiver to keep synchronization the power save mode with the associated WLAN transceiver. The peer access point should not initiate a frame exchange with WLAN transceiver in the power save mode. Before the WLAN transceiver switches to the power save mode, the WLAN transceiver needs to contend for the channel resources so as to transmit frame (s) to notify the conventional peer access point of this power save mode change information.

However, WLAN standard adopts the CSMA/CA back-off scheme, and it cannot be guaranteed that the channel resources can be successfully allocated to the conventional WLAN transceiver in this situation and the conventional WLAN transceiver may not be able to timely transmit a power save mode change notification to the conventional peer access point when needs to switch the power-save mode. This causes the loss of power save mode synchronization between the WLAN transceiver and peer access point and bad frame exchange performance of multi-radios operated in TDD mode.

In addition, more seriously, new WLAN standards (such as IEEE802.11n/ac) support packet aggregation (A-MPDU) to transmit a bigger frame size in a single transmission to improve efficiency. The bigger frame takes a longer transmission time. Radio interferences are inevitably introduced when the transmission time of data packet/frames transmitted from the conventional peer access point to the conventional WLAN transceiver is too long to partially overlap with the BT/LTE TDD phase of the time-division duplex communication system. Alternatively, an access point may transmit short frames (for example, a small size A-MPDU aggregated frame or non-aggregation frame) to reduce the possibility of overlap with remote peer co-located BT/LTE radios operation phase. These short frames cause the data exchange performance of WLAN communication is significantly degraded. It is impossible to merely adopt the conventional WLAN transceiver and conventional peer access point to avoid interferences and improve performance simultaneously.

EP3089525A1 discloses a device capable of supporting different radio communication standards.

### Summary

Therefore one of the objectives of the invention is to provide a communication device with co-located multi-radios operating in time-division duplex mode, a corresponding method, and a peer communication device such as a peer access point, to provide a novel data transmission/exchange mechanism for the time-division duplex communication, so as to solve the above-mentioned problems. A communication device according to the invention is defined in independent claim 1, a corresponding method according to the invention is defined in independent claim 7, and a (peer) communication device according to the invention is defined in independent claim 15. The dependent claims define preferred embodiments thereof.

According to embodiments of the invention, a communication device which is capable of respectively supporting different radio communication standards operating in time-division mode during different time periods is disclosed. The communication device comprises a first communication circuit and a second communication circuit. The first communication circuit is configured for supporting a first radio communication standard. The second communication circuit is configured for supporting a second radio communication standard different from the first radio communication standard. The first communication circuit is arranged to send time information to a peer communication circuit for notifying the peer communication circuit of when the first communication circuit will switch to a radio inactive mode.

According to the embodiments, a method of communication device which is capable of respectively supporting different radio communication standards during different time periods is disclosed. The communication device comprises a first communication circuit configured for supporting a first radio communication standard and a second communication circuit configured for supporting a second radio communication standard different from the first radio communication standard. The method comprises: using the first communication circuit to send time information to a peer communication circuit for notifying the peer communication circuit of when the first communication circuit will switch to a radio inactive mode.

According to the embodiments, an access point device in a communication system which is capable of supporting first radio communication standard peer operating between normal and radio inactive mode during different time periods is disclosed. The access point device comprises a transceiver. The transceiver is configured for receiving target time information from a peer communication circuit, and for dynamically determining a data length of an aggregation packet which is transmitted during a normal mode of the peer communication circuit according to the target time information. The target time information is used for indicating when the peer communication circuit will switch from the normal mode to a radio inactive mode.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a block diagram of a communication device according to embodiments of the invention.
FIG. 2 is a diagram of an example of the communication device operating under different TDD phases of the communication system according to the embodiments of the invention.
FIG. 3 is a flowchart diagram of the operation of communication device of FIG. 1.

### Detailed Description

The invention aims at providing a solution of a data transmission mechanism for a communication system in which a communication device has at least a first communication circuit and a second communication circuit wherein the first and second communication circuits respectively support different radio communication standards during different time periods/slots. For example, the first communication circuit may be a communication circuit supporting wireless local area network (WLAN) communication standard, e.g. IEEE 802.11a/b/g/n/ac. The second communication circuit may be a communication circuit supporting Bluetooth (BT) or Long Term Evolution (LTE) communication standard. That is, in one embodiment, the first communication circuit for example may be a contention-based communication circuit which needs to contend for channel resources with other communication circuits so as to transmit frames/packets, and the second communication may be a non-contention-based communication circuit which is arranged to transmit packets/frames during a corresponding allocated time period/slot and does not need to contend for channel resources; however, this is not intended to be a limitation.

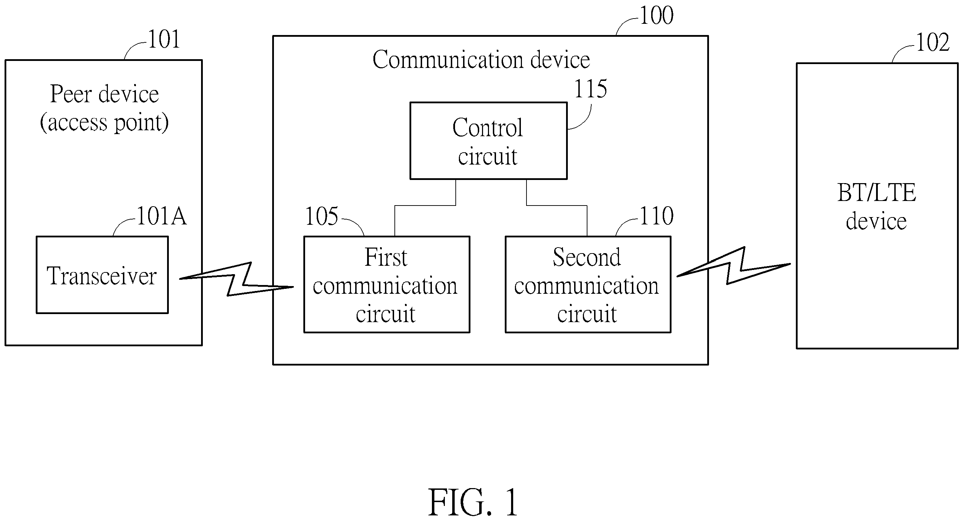

FIG. 1 is a block diagram of a communication device 100 according to embodiments of the invention. The communication device 100 comprises a first communication circuit 105 and a second communication circuit 110 which respectively supporting WLAN communication standard and BT/LTE communication standard. For example, the first communication circuit 105 may be a WLAN communication circuit/transceiver which is arranged to contend for wireless channel(s) resource with other wireless station devices. The first communication circuit 105 may be arranged to communicate with the peer communication device 101 such as an access point which comprises a transceiver 101A.

The second communication circuit 110 for example may be a circuit/transceiver employing BT/LTE communication standard (but not limited) which is arranged to transmit/receive data in allocated time slots. The second communication circuit 110 does not need to contend for channel resources, and for example may be arranged to communicate with the BT/LTE device 102.

That is, such TDD communication system is a WLAN and BT/LTE co-existence communication system in which the communication device 100 supports both WLAN communication and BT/LTE communication standards.

Since the transmission power may cause severe interference to co-located radio's reception signal, a TDD (time division duplex) operation mode would be adopted to avoid such interference. The control circuit 115 may be arranged to alternately activate/deactivate the first communication circuit 105 during a first time period/slot such as 2.5 milliseconds (but not limited) and the second communication circuit 110 during a second time period/slot such as 1.25 milliseconds different and distinct from the first time period/slot.

For example, the control circuit 115 may deactivate the first communication circuit 105 such as a WLAN transceiver by controlling the first communication circuit 105 to enter a radio inactive mode (i.e. power save mode) when the second communication circuit 110 such as a BT/LTE transceiver is activated by the control circuit 115 to receive and/or transmit BT/LTE data frames/packets. Instead, the second communication circuit 110 is deactivated by the control circuit 115 when the control circuit 115 activates the first communication circuit 105 by controlling the first communication circuit 105 to switch from the radio inactive mode to a normal mode.

It should be noted that a conventional WLAN communication circuit such as a transceiver may need to contend for channel resources with other WLAN transceivers. If the conventional WLAN transceiver decides to enter the power-save mode, such WLAN transceiver may need to contend for the channel resource so as to notify a conventional peer access point of this power save mode change information. However, it cannot be guaranteed that the channel resource can be timely allocated by the conventional WLAN transceiver, and in this situation the conventional WLAN transceiver cannot successfully complete power-save mode change notification to the conventional peer access point. Thus, the data exchange performance/efficiency of the communication device will be degraded.

In the embodiments of the invention, to significantly improve the data exchange performance/efficiency of the communication device 100 as well as avoid severe interferences, the communication device 100 is arranged to control the first communication circuit 105 to send the frame embodied with target time information to notify the peer access point 101 that the first communication circuit 105 now is in normal mode to be able to do frame exchange with access point 101 till the target time, and will switch to radio inactive (power save) mode at the target time. Thus, the peer access point 101 can schedule an optimized frame exchange sequence based on the target time information.

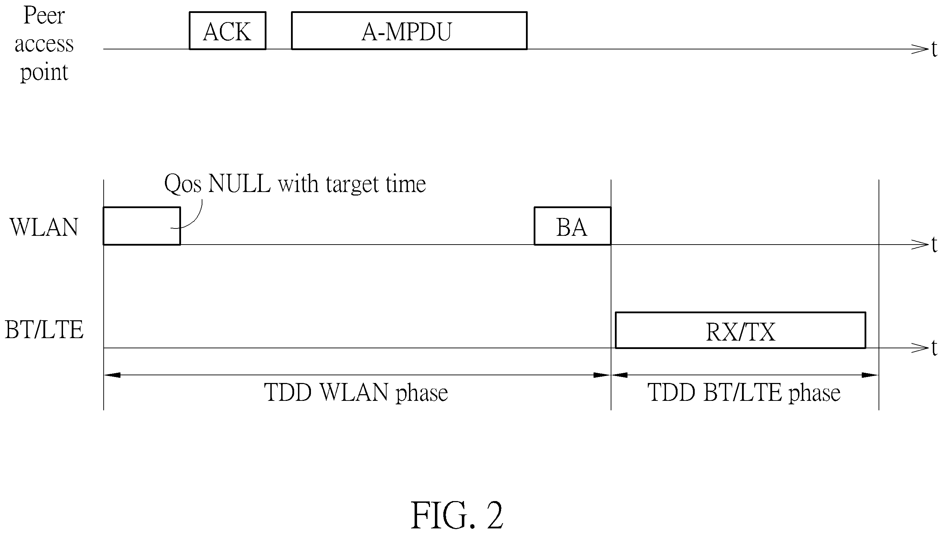

FIG. 2 is a diagram of an example of the communication device 100 operating under different TDD phases of the communication system according to the embodiments of the invention. As shown in FIG. 2, during the first time period/slot (i.e. TDD WLAN phase), the control circuit 115 is arranged to activate the first communication circuit 105 and to deactivate the second communication circuit 110. Instead, during the second time period/slot (i.e. TDD BT/LTE phase), the control circuit 115 is arranged to activate the second communication circuit 110 and to deactivate the first communication circuit 105.

During the TDD WLAN phase, the first communication circuit 105 is arranged to operate under the normal mode and to send the target time information to the peer access point 101 to notify the peer access point 101 of when will the first communication circuit 105 enter the radio inactive (power-save) mode. For example, the transmission of such target time information can be transmitted immediately when the first communication circuit 105 switches from the radio inactive mode to the normal mode. Alternatively, such transmission may be triggered under the normal mode to update the target time information; this is not intended to be a limitation.

The first communication circuit 105 for example is arranged to send a specific control/data/management frame such as a QoS (quality of service) Null or an action frame (but not limited) to the peer access point 101 wherein the target time information is embodied within a QoS Control field of the QoS Null frame or information elements in action frame body. For instance, the first communication circuit 105 may employ and set bit 7 of QoS control field in the QoS Null frame to notify the peer access point 101 of this is a notification of the target time information. The first communication circuit 105 may employ and send bits 8∼15 of QoS control field in the QoS Null frame to carry the value of target time information; this is not meant to be a limitation.

In addition, the target time information may carry absolute time information or offset time information. For example, timing synchronization between the peer access point 101 and the first communication circuit 105 can be achieved by periodically exchanging timing information through beacon frames. In the same BSS, a timing synchronization function (TSF) can be used to keep timers for all devices synchronized. The target time information may be a relative offset value to the TSF of the same BSS or may be an absolute value of such TSF.

Thus, when receiving the relative offset value or absolute value indicated by the target time information, the peer access point 101 can know the target time that the first communication circuit 105 will switch from the normal mode to the radio inactive mode. That is, the peer access point 101 can know when the first communication circuit 105 will go to power save mode. After receiving the relative offset value or absolute value, the peer access point 101 is arranged to use the transceiver 101A to send an acknowledgement ACK back to the first communication circuit 105 and then to transmit MPDU frame (s) or an aggregated A-MPDU frame to the first communication circuit 105. In the embodiment, the transceiver 101A is arranged to send the aggregated A-MPDU frame to the first communication circuit 105 wherein the aggregated A-MPDU frame is generated by aggregating multiple MPDU frames having the whole frame exchange sequences not exceeding the TDD WLAN phase as illustrated in FIG. 2. For example, the transceiver 101A of the peer access point 101 can be arranged to aggregate 64 MPDU frames as the aggregated A-MPDU frame. By referring to the target time information transmitted from communication circuit 105, the peer access point 101 could know the end time of TDD WLAN phase of communication circuit 105, and to determine the optimal A-MPDU frame size to successfully complete the A-MPDU frame exchange sequence before end of TDD WLAN phase of communication circuit 105.

Thus, by sending the target time information embodied within the control/data/management frame to the peer access point 101, this can make the peer access point 101, after receiving such target time information, appropriately determine the size of the A-MPDU, i.e. the number of MPDU packets to be aggregated, so that the A-MPDU frame can be successfully received and acknowledged by the first communication circuit 105 before the first communication circuit 105 enters the power-save mode, to significantly improve the frame exchange efficiency of WLAN communication as well as avoid interferences between WLAN and BT/LTE communications.

The first communication circuit 105 is arranged to send an acknowledgement signal BA back to the peer access point 101 after receiving the aggregation frame A-MPDU. Such acknowledgement signal BA is transmitted before the first communication circuit 105 enters the power-save mode and the second communication circuit 110 is activated. Based on the target time information, the transceiver 101A of the peer access point 101 can appropriately handle/determined/adjust the transmission frame size of A-MPDU frame so as to make the acknowledgement signal BA can be successfully transmitted at the later or last timing during the normal mode before the first communication circuit 105 enters the power-save mode.

Then, after the first communication circuit 105 enters the power-save mode and the second communication circuit 110 is activated, the second communication circuit 110 can be arranged to communicate with the BT/LTE device 102 via BT/LTE communication standard without interference between WLAN and BT/LTE communication circuits.

Compared to the conventional data transmission scheme, by sending the target time information to the peer access point 101 from the first communication circuit 105 to notify the peer access point 101 of when will the first communication circuit 105 be deactivated, i.e. enter the power-save mode, this can make the peer access point 101 appropriately transmit an aggregation packet having appropriate frame size to the first communication circuit 105. Accordingly, the interferences can be avoided and the WLAN throughput performance can be significantly improved. That is, the peer access point 101 based on the target time information can schedule optimized frame exchange sequence and/or schedule optimized frame size.

Further, the communication device 100 can be arranged to decide when to send the target time information to the peer access point 101. For example, the control circuit 115 is arranged to control the first communication circuit 105 to send the target time information to the peer access point 101 immediately when the communication device 100 enters the normal mode of WLAN communication. Alternatively, the communication device 100 may be arranged to send the target time information at different timings during the normal mode.

Further, preferably, the target time information may be embodied by the communication device into an action frame which is a type of management frame used to trigger an action. This modification also falls within the scope of the invention.

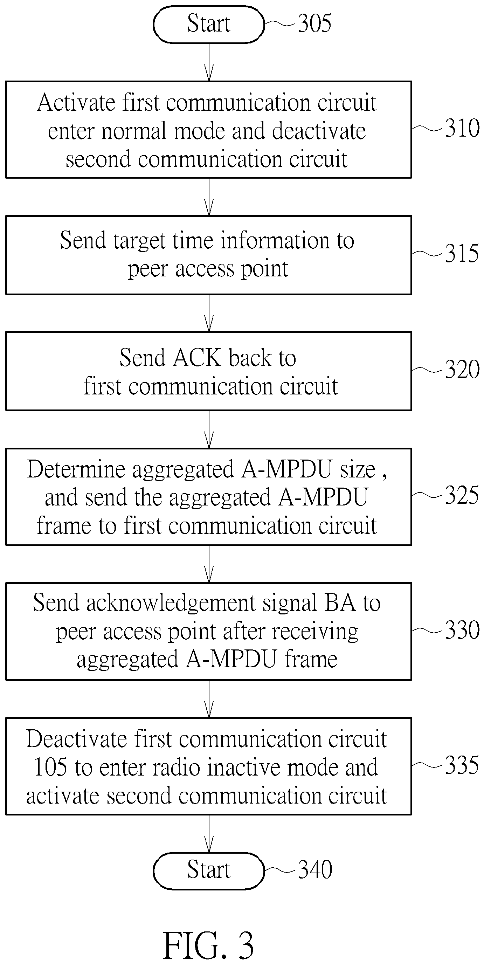

Additionally, to make readers more clearly understand the spirits of the invention, FIG. 3 shows a flowchart of the operation of communication device 100 of FIG. 1. Provided that substantially the same result is achieved, the steps of the flowchart shown in FIG. 3 need not be in the exact order shown and need not be contiguous, that is, other steps can be intermediate. Steps are detailed in the following:
Step 305: Start;
Step 310: The control circuit 115 is arranged to activate the first communication circuit 105 enter the normal mode and deactivate the second communication circuit 110;
Step 315: The first communication circuit 105 sends the target time information which is embodied within a frame such as IEEE 802.11 QoS Null or action frame to the transceiver 101A of peer access point 101;
Step 320: The transceiver 101A of peer access point 101 sends an acknowledgement ACK corresponding to the IEEE 802.11 QoS Null or action frame to the first communication circuit 105;
Step 325: The transceiver 101A of peer access point 101 determine the frame size of aggregated A-MPDU frame such whole frame exchange sequence end before target time of the first communication circuit 105, sending the A-MPDU frame to the first communication circuit 105;
Step 330: The first communication circuit 105 sends the acknowledgement signal BA , corresponding to the aggregated A-MPDU frame, to the transceiver 101A of peer access point 101 after receiving the aggregated A-MPDU frame;
Step 335: The control circuit 115 deactivates the first communication circuit 105 to enter the radio inactive mode and activates the second communication circuit 110; and
Step 340: End.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A communication device (100) of a multi-radio communication system which is capable of respectively supporting different radio communication standards during different time periods, comprising:
a first communication circuit (105), configured for supporting a first radio communication standard; and
a second communication circuit (110), configured for supporting a second radio communication standard different from the first radio communication standard; the device being **characterized by** the first communication circuit (105) is arranged to send time information to a peer communication circuit (101, 101A) for notifying the peer communication circuit (101, 101A) of when the first communication circuit (105) will switch to a radio inactive mode.

2. The communication device of claim 1, wherein the first communication circuit (105) is a wireless local area network (WLAN) communication circuit, and the second communication circuit (110) is a Bluetooth communication circuit or a Long Term Evolution communication circuit.

3. The communication device of claim 1 or 2, wherein when the first communication circuit (105) is activated to enter a normal mode, the first communication circuit (105) is arranged to send the time information to indicate when the first communication circuit (105) will enter the radio inactive mode so as to make a peer communication circuit (101, 101A) handle transmission of frame (s) according to the time information during the normal mode.

4. The communication device of any one of claims 1 to 3, wherein the time information is carried within a control field of a frame transmitted by the first communication circuit (105).

5. The communication device of claim 4, wherein the frame is a QoS Null frame or an action frame.

6. The communication device of any one of claims 1 to 5, wherein the time information is used to make the peer communication circuit (101, 101A) dynamically determine a size of an aggregation frame which is transmitted during the normal mode.

7. A method of communication device (100) of a multi-radio communication system, wherein the multi-radio communication system comprises a first communication circuit (105) configured for supporting a first radio communication standard and a second communication circuit (110) configured for supporting a second radio communication standard different from the first radio communication standard, the method being **characterized by** comprising:
using the first communication circuit (105) to send time information to a peer communication circuit (101, 101A) for notifying the peer communication circuit (101, 101A) of when the first communication circuit (105) will switch to a radio inactive mode (315).

8. The method of claim 7, wherein the first communication circuit (105) is a WLAN communication circuit, and the second communication circuit (110) is a Bluetooth communication circuit or a Long Term Evolution communication circuit.

9. The method of claim 7 or 8, wherein the step of using the first communication circuit (105) to send the time information to the peer communication circuit (101, 101A) comprises:
when the first communication circuit (105) is activated to enter a normal mode, sending the time information to indicate when the first communication circuit (105) will enter the radio inactive mode so as to make a peer communication circuit (101, 101A) handle transmission of frame(s) according to the time information during the normal mode (315) .

10. The method of any one of claims 7 to 9, wherein the time information is carried within a control field of a frame transmitted by the first communication circuit (105).

11. The method of claim 10, wherein the frame is a QoS Null frame or an action frame.

12. The method of any one of claims 7 to 11, wherein the time information is used to make the peer communication circuit (101, 101A) dynamically determine a size of an aggregation frame which is transmitted during the normal mode.

13. The communication device of any one of claims 1 to 6, or the method of any one of claims 7 to 12, wherein the time information is target time information sent to a peer communication circuit (101, 101A) when the first communication circuit (105) is activated to enter a normal mode.

14. The communication device or the method of claim 13, wherein the time information is used for notifying the peer communication circuit (101, 101A) of when the first communication circuit (105) will switch from the normal mode to the radio inactive mode.

15. A communication device (101) which is capable of supporting first radio communication standards, the device being **characterized by** comprising:
a transceiver (101A), configured for receiving time information from a peer communication circuit (100, 105), and for dynamically determining a size of an aggregation frame which is transmitted during a normal mode of the peer communication circuit (100, 105) according to the target time information;
wherein the target time information is used for indicating when the peer communication circuit (100, 105) will switch from the normal mode to a radio inactive mode.

## Patentansprüche

1. Kommunikationsvorrichtung (100) eines Mehrfachfunkkommunikationssystems, welches in der Lage ist, jeweils unterschiedliche Funkkommunikationsstandards während unterschiedlicher Zeitabschnitte zu unterstützen, aufweisend:
eine erste Kommunikationsschaltung (105), die eingerichtet ist, einen ersten Funkkommunikationsstandard zu unterstützen; und
eine zweite Kommunikationsschaltung (110), die eingerichtet ist, einen zweiten zu dem ersten Funkkommunikationsstandard unterschiedlichen Funkkommunikationsstandard zu unterstützen;
wobei die Vorrichtung **dadurch gekennzeichnet ist, dass**
die erste Kommunikationsschaltung (105) ausgelegt ist, Zeitinformationen an eine Partnerkommunikationsschaltung (101, 101A) zu senden, um die Partnerkommunikationsschaltung (101, 101A) darüber in Kenntnis zu setzen, wann die erste Kommunikationsschaltung (105) zu einem Funkinaktivitätsmodus umschalten wird.

2. Kommunikationsvorrichtung gemäß Anspruch 1, wobei die erste Kommunikationsschaltung (105) eine Lokales-Funknetz- (WLAN-) Kommunikationsschaltung ist, und die zweite Kommunikationsschaltung (110) eine Bluetooth-Kommunikationsschaltung oder eine Long-Term-Evolution-Kommunikationsschaltung ist.

3. Kommunikationsvorrichtung gemäß Anspruch 1 oder 2, wobei, wenn die erste Kommunikationsschaltung (105) aktiviert wird, in einen normalen Modus überzugehen, die erste Kommunikationsschaltung (105) ausgelegt ist, die Zeitinformationen zu senden, um anzuzeigen, wann die erste Kommunikationsschaltung (105) in den Funkinaktivitätsmodus übergehen wird, um so eine Partnerkommunikationsschaltung (101, 101A) zu veranlassen, während des normalen Modus Übertragungen eines Rahmens (von Rahmen) gemäß den Zeitinformationen zu behandeln.

4. Kommunikationsvorrichtung gemäß einem der Ansprüche 1 bis 3, wobei die Zeitinformationen innerhalb eines Steuerfelds eines Rahmens übertragen werden, der durch die erste Kommunikationsschaltung (105) übertragen wird.

5. Kommunikationsvorrichtung gemäß Anspruch 4, wobei der Rahmen ein QoS-Null-Rahmen oder ein Aktionsrahmen ist.

6. Kommunikationsvorrichtung gemäß einem der Ansprüche 1 bis 5, wobei die Zeitinformationen verwendet werden, um die Partnerkommunikationsschaltung (101, 101A) zu veranlassen, dynamisch eine Größe eines Zusammenfassungsrahmens zu bestimmen, welcher während des normalen Modus übertragen wird.

7. Verfahren einer Kommunikationsvorrichtung (100) eines Mehrfachfunkkommunikationssystems, wobei das Mehrfachfunkkommunikationssystem eine erste Kommunikationsschaltung (105), die eingerichtet ist, einen ersten Funkkommunikationsstandard zu unterstützen, und eine zweite Kommunikationsschaltung (110), die eingerichtet ist, einen zweiten zu dem ersten Funkkommunikationsstandard unterschiedlichen Funkkommunikationsstandard zu unterstützen, aufweist, wobei das Verfahren **dadurch gekennzeichnet ist, dass** es umfasst:
Verwenden der ersten Kommunikationsschaltung (105), um Zeitinformationen an eine Partnerkommunikationsschaltung (101, 101A) zu senden, um die Partnerkommunikationsschaltung (101, 101A) darüber in Kenntnis zu setzen, wann die erste Kommunikationsschaltung (105) zu einem Funkinaktivitätsmodus umschalten wird (315).

8. Verfahren gemäß Anspruch 7, wobei die erste Kommunikationsschaltung (105) eine Lokales-Funknetz- (WLAN-) Kommunikationsschaltung ist, und die zweite Kommunikationsschaltung (110) eine Bluetooth-Kommunikationsschaltung oder eine Long-Term-Evolution-Kommunikationsschaltung ist.

9. Verfahren gemäß Anspruch 7 oder 8, wobei der Schritt des Verwendens der ersten Kommunikationsschaltung (105), um die Zeitinformationen an die Partnerkommunikationsschaltung (101, 101A) zu senden, umfasst:
wenn die erste Kommunikationsschaltung (105) aktiviert wird, in einen normalen Modus überzugehen, Senden der Zeitinformationen, um anzuzeigen, wann die erste Kommunikationsschaltung (105) in den Funkinaktivitätsmodus übergehen wird, um so eine Partnerkommunikationsschaltung (101, 101A) zu veranlassen, während des normalen Modus eine Übertragung eines Rahmens (von Rahmen) gemäß den Zeitinformationen zu behandeln (315).

10. Verfahren gemäß einem der Ansprüche 7 bis 9, wobei die Zeitinformationen innerhalb eines Steuerfelds eines Rahmens übertragen werden, der durch die erste Kommunikationsschaltung (105) übertragen wird.

11. Verfahren gemäß Anspruch 10, wobei der Rahmen ein QoS-Null-Rahmen oder ein Aktionsrahmen ist.

12. Verfahren gemäß einem der Ansprüche 7 bis 11, wobei die Zeitinformationen verwendet werden, um die Partnerkommunikationsschaltung (101, 101A) zu veranlassen, dynamisch eine Größe eines Zusammenfassungsrahmens zu bestimmen, welcher während des normalen Modus übertragen wird.

13. Kommunikationsvorrichtung gemäß einem der Ansprüche 1 bis 6 oder Verfahren gemäß einem der Ansprüche 7 bis 12, wobei die Zeitinformationen Zielzeitinformationen sind, die an eine Partnerkommunikationsschaltung (101, 101A) gesendet werden, wenn die erste Kommunikationsschaltung (105) aktiviert wird, in einen normalen Modus überzugehen.

14. Kommunikationsvorrichtung oder Verfahren gemäß Anspruch 13, wobei die Zeitinformationen verwendet werden, um die Partnerkommunikationsschaltung (101, 101A) darüber in Kenntnis zu setzen, wann die erste Kommunikationsschaltung (105) von dem normalen Modus zu dem Funkinaktivitätsmodus umschalten wird.

15. Kommunikationsvorrichtung (101), welche in der Lage ist, erste Funkkommunikationsstandards zu unterstützen, wobei die Vorrichtung **dadurch gekennzeichnet ist, dass** sie aufweist:
einen Sendeempfänger (101A), der eingerichtet ist, Zeitinformationen von einer Partnerkommunikationsschaltung (100, 105) zu empfangen, und dynamisch eine Größe eines Zusammenfassungsrahmens zu bestimmen, welcher während eines normalen Modus der Partnerkommunikationsschaltung (100, 105) gemäß den Zielzeitinformationen übertragen wird;
wobei die Zielzeitinformationen verwendet werden, um anzuzeigen, wann die Partnerkommunikationsschaltung (100, 105) von dem normalen Modus zu einem Funkinaktivitätsmodus umschalten wird.

## Revendications

1. Dispositif de communication (100) d'un système de communication multi-radio qui est capable de prendre en charge respectivement différentes normes de communication radio pendant différentes périodes de temps, comprenant :
un premier circuit de communication (105), configuré pour prendre en charge une première norme de communication radio ; et
un deuxième circuit de communication (110), configuré pour prendre en charge une deuxième norme de communication radio différente de la première norme de communication radio ;
le dispositif étant **caractérisé par le fait que**
le premier circuit de communication (105) soit agencé pour envoyer des informations de temps à un circuit de communication homologue (101, 101A) pour notifier au circuit de communication homologue (101, 101A) du moment où le premier circuit de communication (105) passera à un mode radio inactif.

2. Dispositif de communication de la revendication 1, dans lequel le premier circuit de communication (105) est un circuit de communication de réseau local sans fil (WLAN), et le deuxième circuit de communication (110) est un circuit de communication Bluetooth ou un circuit de communication de la technologie d'évolution à long terme.

3. Dispositif de communication de la revendication 1 ou 2, dans lequel lorsque le premier circuit de communication (105) est activé pour entrer dans un mode normal, le premier circuit de communication (105) est agencé pour envoyer les informations de temps pour indiquer quand le premier circuit de communication (105) entrera dans le mode radio inactif de manière à amener un circuit de communication homologue (101, 101A) à gérer la transmission d'une ou de plusieurs trame(s) selon les informations de temps pendant le mode normal.

4. Dispositif de communication de l'une quelconque des revendications 1 à 3, dans lequel les informations de temps sont transportées dans un champ de commande d'une trame transmise par le premier circuit de communication (105).

5. Dispositif de communication de la revendication 4, dans lequel la trame est une trame QoS Null ou une trame d'action.

6. Dispositif de communication de l'une quelconque des revendications 1 à 5, dans lequel les informations de temps sont utilisées pour amener le circuit de communication homologue (101, 101A) à déterminer dynamiquement une taille d'une trame d'agrégation qui est transmise pendant le mode normal.

7. Procédé de dispositif de communication (100) d'un système de communication multi-radio, dans lequel le système de communication multi-radio comprend un premier circuit de communication (105) configuré pour prendre en charge une première norme de communication radio et un deuxième circuit de communication (110) configuré pour prendre en charge une deuxième norme de communication radio différente de la première norme de communication radio, le procédé étant **caractérisé en ce qu'**il comprend le fait :
d'utiliser le premier circuit de communication (105) pour envoyer des informations de temps à un circuit de communication homologue (101, 101A) pour notifier au circuit de communication homologue (101, 101A) du moment où le premier circuit de communication (105) passera à un mode radio inactif (315).

8. Procédé de la revendication 7, dans lequel le premier circuit de communication (105) est un circuit de communication WLAN, et le deuxième circuit de communication (110) est un circuit de communication Bluetooth ou un circuit de communication de la technologie d'évolution à long terme.

9. Procédé de la revendication 7 ou 8, dans lequel l'étape d'utilisation du premier circuit de communication (105) pour envoyer les informations de temps au circuit de communication homologue (101, 101A) comprend le fait :
lorsque le premier circuit de communication (105) est activé pour entrer dans un mode normal, d'envoyer les informations de temps pour indiquer quand le premier circuit de communication (105) entrera dans le mode radio inactif de manière à amener un circuit de communication homologue (101, 101A) à gérer la transmission d'une ou de plusieurs trame(s) selon des informations de temps pendant le mode normal (315).

10. Procédé de l'une quelconque des revendications 7 à 9, dans lequel les informations de temps sont transportées dans un champ de commande d'une trame transmise par le premier circuit de communication (105).

11. Procédé de la revendication 10, dans lequel la trame est une trame QoS Null ou une trame d'action.

12. Procédé de l'une quelconque des revendications 7 à 11, dans lequel les informations de temps sont utilisées pour amener le circuit de communication homologue (101, 101A) à déterminer dynamiquement une taille d'une trame d'agrégation qui est transmise pendant le mode normal.

13. Dispositif de communication de l'une quelconque des revendications 1 à 6, ou procédé selon l'une quelconque des revendications 7 à 12, dans lequel les informations de temps sont des informations de temps cibles envoyées à un circuit de communication homologue (101, 101A) lorsque le premier circuit de communication (105) est activé pour entrer dans un mode normal.

14. Dispositif de communication ou procédé de la revendication 13, dans lequel les informations de temps sont utilisées pour notifier au circuit de communication homologue (101, 101A) du moment où le premier circuit de communication (105) passera du mode normal au mode radio inactif.

15. Dispositif de communication (101) qui est capable de prendre en charge des premières normes de communication radio, le dispositif étant **caractérisé en ce qu'**il comprend :
un émetteur-récepteur (101A), configuré pour recevoir des informations de temps à partir d'un circuit de communication homologue (100, 105), et pour déterminer dynamiquement une taille d'une trame d'agrégation qui est transmise pendant un mode normal du circuit de communication homologue (100, 105) selon les informations de temps cibles ;
dans lequel les informations de temps cible sont utilisées pour indiquer le moment où le circuit de communication homologue (100, 105) passera du mode normal à un mode radio inactif.
